(19) Europäisches Patentamt
European Patent Office
Office européen des brevets

(11) **EP 3 750 934 A1**

(12) **EUROPEAN PATENT APPLICATION**

(43) Date of publication:
**16.12.2020 Bulletin 2020/51**

(21) Application number: **19179688.7**

(22) Date of filing: **12.06.2019**

(51) Int Cl.:
*C08G 18/00* (2006.01)      *C08G 18/22* (2006.01)
*C08G 18/20* (2006.01)      *C08G 18/76* (2006.01)
*C08G 18/75* (2006.01)      *C08G 18/78* (2006.01)
*C08G 59/22* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **METHOD FOR THE PRODUCTION OF ISOCYANATE-GROUP TERMINATED POLYOXAZOLIDINONES**

(57) The invention is related to a process for producing an isocyanate-group terminated polyoxazolidinone comprising the copolymerization of a polyisocyanate compound (A) with two or more isocyanate groups with a polyepoxide compound (B) with two or more epoxy groups in the presence of a specific catalyst (C), wherein the molar ratio of the isocyanate groups of the polyisocyanate compound (B) to the epoxy groups of the polyepoxide compound (A) is larger than 2:1 and less than 25:1. The invention is also related to the resulting isocyanate-group terminated polyoxazolidinones.

**Description**

The invention is related to a process for producing isocyanate-group terminated polyoxazolidinones comprising the copolymerization of a polyisocyanate compound (A) with two or more isocyanate groups with a polyepoxide compound (B) with two or more epoxy groups in the presence of a specific catalyst (C), wherein the molar ratio of the isocyanate groups of the polyisocyanate compound (A) to the epoxy groups of the polyepoxide compound (B) is larger than 2:1 and less than 25:1. The invention is also related to the resulting isocyanate-group terminated polyoxazolidinones.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

The scientific publication J. Polym. Sci. 8 (1970) 2759-2773 discloses polyoxazolidinones prepared from various bisepoxides and various diisocyanates in the presence of alkaline metal halide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction.

US 4,129,695 A teaches a polymer comprising oxazolidinone and carbodiimide prepared from polyisocyanates and polyepoxides, wherein these compounds can be a diisocyanate or a diepoxide, wherein the ratio of number of isocyanate groups to the number of epoxide groups is between 1.1:1 and 20:1, preferably 1.2:1 and 10:1, wherein tertiary aliphatic, cycloaliphatic and aromatic amines, such as triethylene diamine (DABCO) were applied as catalyst for the oxazolidinone formation.

In Pelzer et al. (European Polymer Journal 107 (2018) oxazolidinone formation was investigated by reaction of 4,4-methylene diphenyl diisocyanate (MDI) with o-cresyl glycidyl ether (OGCE) or Bisphenol A diglycidyl ether (BADGE) in the presence of various tetra-n-butyl ammonium halides, wherein molar BADGE to MDI ratios from 1 to 3 up to 3 to 1 were applied. However, significant amounts of side products, i.e. isocyanurates, were detected operating at a BADGE to MDI ratios of 3 to 1 forming epoxy-terminated oxazolidinones. If a molar BADGE to MDI ratio of 1 to 3 was applied no isocyanate-terminated oxazolidinone formation were possible in the presence of the applied tetra-n-butyl ammonium halide catalysts.

Objective of the present invention was therefore to identify a simple one-step process for the preparation of isocyanate-group terminated polyoxazolidinones with defined isocyanate equivalent weights preferable in combination with a low polydispersity for further polymerization applications. In this context, side reactions, e.g. by formation of isocyanurates or polyurethanes that lead to an increase in product viscosity, should be reduced or beneficially be completely avoided. In addition, the oxazolidinone products should also be less colored with respect to systems described in prior art and such isocyanate-group terminated polyoxazolidinones prepolymer systems should be also meltable for further polymerization applications.

Surprisingly, it has been found that the problem can be solved by a process for producing an isocyanate-group terminated polyoxazolidinone comprising the copolymerization of a polyisocyanate compound (A) with two or more isocyanate groups with a polyepoxide compound (B) with two or more epoxy groups in the presence of a catalyst (C) and optionally in a solvent (D), wherein the molar ratio of the isocyanate groups of the polyisocyanate compound (A) to the epoxy groups of the polyepoxide compound (B) is larger than 2:1 and less than 25:1, and wherein the catalyst (C) is at least one compound selected from the group consisting of

Li(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II)
Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III),
Er(III), Tm(III), Yb(III), Lu(III), Hf(III), Nb(III), Ta(III), Cr(III), Ru(III), Os(III), Rh(III), Ir(III),
Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV),
Nb(V), Ta(V), Bi(V),
Mo(VI), W(VI), and
compounds represented by the formula (I)

$$[M(R1)(R2)(R3)(R4)]+nYn- \qquad (I)$$

wherein M is phosphorous or antimony, preferred phosphorous

wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms, wherein Y is a halide, carbonate, nitrate, sulfate or phosphate anion, more preferred a halide or carbonate and wherein n is an integer of 1, 2 or 3.

As used herein, the term "polyoxazolidinone" is meant to denote compounds containing at least two oxazolidinone groups in the molecule. The term "isocyanate-group terminated" polyoxazolidinone is related to polyoxazolidinone compounds, wherein the molar ratio of the isocyanate groups of the polyisocyanate compound (A) to the epoxy groups of the polyepoxide compound (B) is larger than 2:1, so no terminal epoxy groups are present within the polyoxazolidinone compound according to the present invention.

In an embodiment of the method according to the invention the copolymerization process is performed at a reaction temperature of $\geq$ 130 °C to $\leq$ 280 °C, preferably at a temperature of $\geq$ 140 °C to $\leq$ 240 °C, more preferred at a temperature of $\geq$ 155 °C to $\leq$ 210 °C. If temperatures below 130 °C are set, the reaction is generally very slow. At temperatures above 280 °C, the amount of undesirable secondary products increases considerably.

In an embodiment of the method according to the invention the copolymerization process is performed at reaction times of 10 min to 20 h, preferably at 20 min to 10 h and more preferably at 30 min to 6 h.

As used herein, the term "polyisocyanate compound" is meant to denote compounds having two or more isocyanate groups.

In an embodiment of the method according to the invention, the polyisocyanate compound (A) is an aliphatic or cycloaliphatic polyisocyanate compound (A-1), and/or an araliphatic or aromatic polyisocyanate compound (A-2), preferable an aliphatic polyisocyanate compound (A-1).

In an embodiment of the method according to the invention, the polyisocyanate compound (A) is at least one polyisocyanate accessible in various ways, for example by phosgenation in the liquid or gas phase or by a phosgene-free route, for example by thermal urethane cleavage.

In an embodiment of the method according to the invention, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethylbenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

More preferred, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299, and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

And most preferred, the polyisocyanate compound (A) is at least one compound selected from the group consisting of polyisocyanates from the molecular weight range of 140 g/mol to 600 g/mol having aliphatically, cycloaliphatically, araliphatically and/or aromatically bonded isocyanate groups, examples being 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), and 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aforementioned polyisocyanate compounds (A) can also be used.

As used herein, the term "aliphatic polyisocyanate compound" is meant to denote compounds having two or more isocyanate groups and no aromatic moieties.

In a preferred embodiment of the method according to the invention the polyisocyanate compound (A) is an aliphatic or cycloaliphatic polyisocyanate (A-1).

In an embodiment of the method according to the invention, the aliphatic polyisocyanate compound (A-1) is at least one compound selected from the group consisting of polyisocyanates from the molecular weight range of 140 g/mol to 400 g/mol having aliphatically or cycloaliphatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbornane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

More preferred, the aliphatic polyisocyanate compound (A-1) is at least one compound selected from the group consisting of polyisocyanates from the molecular weight range of 140 g/mol to 400 g/mol having aliphatically, cycloaliphatically, araliphatically and/or aromatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 1,5-diisocyanato-2,2-dimethylpentane, 2,2,4- or 2,4,4-trimethyl-1,6-diisocyanatohexane, 1,8-diisocyanatooctane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, or any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates.

And most preferred, the aliphatic polyisocyanate compound (A-1) is at least one compound selected from the group consisting of 1,5-diisocyanatopentane (pentamethylene diisocyanate, PDI), 1,6-diisocyanatohexane (hexamethylene diisocyanate, HDI), 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI).

A mixture of two or more of the aforementioned polyisocyanate compounds (A) can also be used.

As used herein, the term "aromatic polyisocyanate compound" is meant to denote compounds having two or more isocyanate groups and aromatic moieties.

In a less preferred embodiment of the method according to the invention the polyisocyanate compound (A) is an aromatic and/or araliphatic polyisocyanate compound (A-2).

In a preferred embodiment of the method according to the invention, the aromatic polyisocyanate compound (A-2) is at least one compound and is selected from the group consisting of araliphatic and/or aromatic diisocyanates and triisocyanateare of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,4-bis(2-isocyanatoethyl)benzene, 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, 1,3-propylene glycol diphenylether diisocyanate, triisocyanatobenzene, 2,4,6-triisocyanatotoluene, trimethylbenzene triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a more preferred embodiment of the method according to the invention, the aromatic polyisocyanate compound (A-2) is at least one compound and is selected from the group consisting of araliphatic and/or aromatic diisocyanates and triisocyanateare of the molecular weight range from 160 g/mol to 600 g/mol, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyl-diphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI", and also the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 or JP 56059828 or are mixtures of at least two such polyisocyanates, and also those polyisocynanate compounds bearing both aromatic and aliphatic isocyanate groups, for example the mixed trimers or allophanates of 2,4- and/or 2,6-TDI with HDI described in DE-A 1 670 667, EP-A 0 078 991, EP-A 0 696 606 and EP-A 0 807 623.

In a most preferred embodiment of the method according to the invention, the aromatic polyisocyanate compound (A-2) is at least one compound and is selected from the group consisting of 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI).

A mixture of two or more of the aromatic polyisocyanate compounds (A-2) can also be used.

As used herein, the term "polyepoxide compound" is meant to denote compounds having two or more epoxide groups.

In a preferred embodiment of the invention, the polyepoxide compound (B) is an aliphatic or cycloaliphatic polyepoxide compound (B-1) and/or aromatic or araliphatic polyepoxide compound (B-2), preferably aliphatic polyepoxide compound (B-1).

In a preferred embodiment of the invention, the epoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol A diglycidyl ether, bisphenol A diglycidyl ether, bisphenol F diglycidyl ether, bisphenol S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol F diglycidyl ether, tetramethyl bisphenol S diglycidyl ether, diglycidyl terephthalate, diglycidyl o-phthalate, trimellitic acid triglycidyl ester, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, polybutadiene diepoxide, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, limonene diepoxide, the diepoxides of double unsaturated fatty acid C1 - C18 alkyl esters, polyepoxides of double unsaturated ethoxylated fatty alcohols, 2-dihydroxybenzene diglycidyl ether , 1,4-dihydroxybenzene diglycidyl ether, 4,4'-(3,3,5-trimethylcyclohexyliden)bisphenyl diglycidyl ether and diglycidyl isophthalate, tetrabromobisphenol A diglycidyl ether, cardanol-based diglycidyl ether, Hydrochinone diglycidyl ether, 4,4'-dihydroxy benzene diglycidyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components. Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, isosorbidediglycidyl ether, octanediol diglycidyl ether, trimethylolpropane polyglycidyl ether, glycerol polyethylene triglycidyl ether, 2-ethyl hexyl diglycidyl ether.

More preferred the polyepoxide compound (B) is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, isosorbide diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether, bisphenol A diglycidyl ether, bisphenol F diglycidyl ether, bisphenol S diglycidyl ether.

Most preferred the polyepoxide compound (B) is selected from the group consisting of ethanediol diglycidyl ether, butanediole diglycidyl ether, hexanediol diglycidyl ether, trimethylopropane triglycidyl ether.

A mixture of two or more of the aforementioned polyepoxide compounds (B) can also be used.

As used herein, the term "aliphatic polyepoxide compound" is meant to denote compounds having two or more epoxide groups and also aromatic moieties.

In a preferred embodiment of the invention the polyepoxide compound (B) is an aliphatic polyepoxide compound (B-1).

In a preferred embodiment of the invention, the aliphatic polyepoxide compound (B-1) is one or more compound(s) and is selected from the group consisting of neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, propanediol diglycidyl ether, , 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether.

In a more preferred embodiment of the invention, the aliphatic polyepoxide compound (B-1) is one or more compound(s) and is selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaeritrol polyglycidyl ether, the diepoxides of double unsaturated fatty acid C1 - C18 alkyl esters, aliphatic di- or polyglycidyl ether, derived via epoxidation of di- or polyfunctional alcohols with aliphatic linear, aliphatic branched, or cycloaliphatic moieties consisting of 2-40 carbon atoms, for example ethanediol diglycidyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether.

Most preferred the aliphatic polyepoxide compound (B-1) is one or more compound(s) and is selected from the group consisting of ethanediol diglycidyl ether, butanediole diglycidyl ether, hexane diol diglycidyl ether, trimethylolpropane triglycidyl ether.

A mixture of two or more of the aforementioned aliphatic polyepoxide compounds (B-1) can also be used.

As used herein, the term "aromatic polyepoxide compound" is meant to denote compounds having two or more epoxide groups and also aromatic moieties.

In an alternative preferred embodiment of the invention the polyepoxide compound (B) is an aromatic polyepoxide (B-2).

In a preferred embodiment of the invention, aromatic polyepoxide compound (B-2) is one or more compound(s) and is selected from the group consisting of resorcinol diglycidyl ether, bisphenol A diglycidyl ether, bisphenol F diglycidyl ether, bisphenol S diglycidyl ether, 9,9-bis(4-glycidyloxy phenyl)fluorine, tetrabromo bisphenol A diglycidyl ether, tetrachloro bisphenol A diglycidyl ether , tetramethyl bisphenol A diglycidyl ether, tetramethyl bisphenol F diglycidyl ether, tetramethyl bisphenol S diglycidyl ether, diglycidyl terephthalate, diglycidyl o-phthalate, trimellitic acid triglycidyl ester, 1,4-cyclohexane dicarboxylic acid diglycidyl ester, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, tetrabromobisphenol A, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

In a more preferred embodiment of the invention, aromatic polyepoxide compound (B-2) is one or more compound(s) and is selected from the group consisting of bisphenol A diglycidyl ether, bisphenol F diglycidyl ether, bisphenol S diglycidyl ether, tetramethyl bisphenol A diglycidyl ether, tetramethyl bisphenol F diglycidyl ether, tetramethyl bisphenol S diglycidyl ether, diglycidyl terephthalate, diglycidyl o-phthalate, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether.

In a most preferred embodiment of the invention, aromatic polyepoxide compound (B-2) is one or more compound(s) and is selected from the group consisting of bisphenol A diglycidyl ether, bisphenol F diglycidyl ether, bisphenol S diglycidyl ether, tetramethyl bisphenol A diglycidyl ether, tetramethyl bisphenol F diglycidyl ether, tetramethyl bisphenol S diglycidyl ether, diglycidyl terephthalate, 2-dihydroxybenzene diglycidyl ether, 1,4-dihydroxybenzene diglycidyl ether, diglycidyl isophthalate,

A mixture of two or more of the aforementioned aromatic polyepoxide compounds (B-2) can also be used.

In a first alternative preferred embodiment of the invention the polyisocyanate compound (A) is an aliphatic polyisocyanate compound (A-1) and the polyepoxide compound (B) is an aliphatic polyepoxide compound (B-1).

In a second alternative preferred embodiment of the invention the polyisocyanate compound (A) is an aliphatic polyisocyanate compound (A-1) and the polyepoxide compound (B) is an aromatic polyepoxide compound (B-2).

In a third alternative preferred embodiment of the invention the polyisocyanate compound (A) is an aromatic polyisocyanate compound (A-2) and the polyepoxide compound (B) is an aliphatic polyepoxide compound (B-1).

In a fourth alternative preferred embodiment of the invention the polyisocyanate compound (A) is an aromatic polyisocyanate compound (A-2) and the polyepoxide compound (B) is an aromatic polyepoxide compound (B-2).

A mixture of one or more of the aforementioned aliphatic polyisocyanates (A-1), aromatic polyisocyanate compound (A-2), aliphatic polyepoxide compound (B-1) and/or aromatic polyepoxide compound (B-2) can also be used.

In a preferred embodiment of the invention, the molar ratio of the isocyanate groups of the polyisocyanate compound (A) to the epoxy groups of the polyepoxide compound (B) is from 2.6:1 to 7:1, preferably from 2.7:1 to 6:1 more preferably from 2.8:1 to 5:1. If the latter molar ratio is higher than 7:1, resulting in isocyanate-terminated oxazolidinones, the oxazolidinone groups in the overall mixture are too diluted by residual isocyanate monomer to have an impact on the properties of the final polymer, compared to a polymer being polymerized from only the monomeric polyisocyanate compound.

In a preferred embodiment of the invention, the process comprises the steps:

i) Mixing the polyisocyanate compound (A), the polyepoxide compound (B), the catalyst (C) and optionally the solvent (D) forming a mixture (i);

ii) Copolymerizing the mixture (i) forming an isocyanate-group terminated polyoxazolidinone mixture (ii)

iii) optionally removal of solvent (D) and/or unreacted polyisocyanate compound (A) from the isocyanate-group terminated polyoxazolidinone mixture (ii).

In an alternative preferred embodiment of the invention, the process comprises the steps:

alpha) Mixing the polyepoxide compound (B), at least part of the catalyst (C) and optionally at least part of the solvent (D) forming a mixture (alpha);

beta) Addition of the polyisocyanate compound (A) to the mixture (alpha) at copolymerization conditions forming an isocyanate-group terminated polyoxazolidinone mixture (beta);

gamma) optionally removal of solvent (D) and/or unreacted polyisocyanate compound (A) from the isocyanate-group terminated polyoxazolidinone mixture (beta).

In a further alternative, less-preferred embodiment of the invention, the process comprises the steps:

a) Mixing the polyisocyanate compound (A) and at least part of the catalyst (C) and at least part of the solvent (D) forming a mixture (a);

b) Addition of the polyepoxide compound (B) to the mixture (a) at copolymerization conditions forming an isocyanate-group terminated polyoxazolidinone mixture (b);

c) Optionally removal of solvent (D) and/or unreacted polyisocyanate compound (A) from the isocyanate-group terminated polyoxazolidinone mixture (b).

The conditions for the copolymerization process at elevated temperatures are explained above. For the removal of the solvent (D) and/or unreacted polyisocyanate compound (A) in step i), step gamma) or step c), appropriate purification methods, e.g. thin film evaporation, can be applied. The removal of the solvent (D) and/or the unreacted polyisocyanate compound (A) can be beneficial for future polymerization applications since e.g. halogen containing solvents and/or the unreacted polyisocyanate compound (A) might disturb these polymerization reactions and negatively impact the resulting polymerization products. Moreover, the removal of the solvent (D) and/or the monomeric polyisocyanate compound (A) leads to a product with lower health risk, as the amount of hazardous monomeric polyisocyanates compound (A) and solvent (D) can be significantly reduced. The remaining polyoxazolidinone prepolymer has a comparably high molecular weight and is not expected to represent a higher risk than other polyisocyanates prepolymers without solvent and with low concentrations of monomeric polyisocyanates compounds.

In a preferred embodiment of the invention, the non-reacted polyisocyanate compound (A) and/or the solvent (D) is removed by distillation, preferably by thin-film evaporation in order to remove the solvent (D) and/or the unreacted polyisocyanate compound (A) that might disturb these polymerization reaction and negatively impact subsequent polymerization products.

A process according to claim 1, wherein the monomeric polyisocyanate compound (A) and/or the solvent (D) is removed by thermal treatment method, preferable distillation and/or extraction, more preferably by thin-film evaporation.

In a preferred embodiment of the invention the catalyst (C) is at least one compound selected from the group consisting LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, LiI and MgCl2.

In a more preferred embodiment of the invention the catalyst (C) is selected from the group consisting of LiCl, LiBr, and LiI.

In a more preferred embodiment of the invention the catalyst (C) is LiBr.

In one embodiment of the method according to the invention, the catalyst (C) is present in a molar amount of 0.001 to 2.0 mol-%, preferably in an amount of 0.01 to $\leq$ 1.5 mol-%, more preferred $\geq$ 0.05 to $\leq$ 1.0 mol-%, based on the polyepoxide compound (B).

In an embodiment of the invention the solvent (D) is used.

In an embodiment of the invention the calculated mass ratio of the sum of diisocyanate compound (A), the bisepoxide compound (B), and catalyst (C) with respect to the sum of diisocyanate compound (A), the bisepoxide compound (B), the catalyst (C), and the solvent (D) ranges from 40 wt-% to 100 wt-%, preferred from 50 wt-% to 90 wt-% and more preferred from 60 wt-% to 80 wt-%.

The solvent (D) is defined in alignment to the general definition as a substance that dissolves a solute, i.e. compound (A) and/or compound (B) and/or compound (C) but does not (chemically) react with compound (A), compound (B) and/or the catalyst (C), in particular the polyisocyanate compound (A).

Suitable solvents (D) are for example organic solvents such as linear or branched alkanes or mixtures of alkanes, toluene, xylene and the isomeric xylene mixtures, mesitylene, mono or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (EMTBE), linear or cyclic ester, or polar aprotic solvents such as 1,4-dioxane, acetonitrile, N,N-dimethylformamide (DMF), N,N-dimethylacetamide (DMAc), dimethylsulfoxide (DMSO), cyclic carbonate, such as ethylencarbonate or propylencarbonate, N-methylpyrrolidone (NMP), sulfolane, tetramethylurea, N,N'-dimethylethylenurea or mixtures of the above mentioned solvents and/or with other solvents., 2-butanone, ethyl acetate, butylacetate, methoxypropylacetate, propylene glycol diacetate, dipropylene glycol dimethyl ether, xylene, toluene, ethylene glycol ether, ethylene glycol monoalkyl ether, ethylene glycol dialkyl ether, butylene glycol, butylene glycol monoalkyl ether, butylene glycol dialkyl ether.

Preferred solvents (D) are 1,2-dichlorobenzene, sulfolane, N-methylpyrrolidone (NMP), ethyl acetate, butylacetate, methoxypropylacetate, propylene glycol diacetate, dipropylene glycol dimethyl ether, xylene, toluene, ethylene glycol dialkyl ether, butylene glycol dialkyl ether.

Another aspect of the present invention is an isocyanate-group terminated polyoxazolidinone, obtainable by a method according to the invention.

In an embodiment of the invention, the polyoxazolidinones have isocyanate equivalent weights (IEW) of from 100 g/eq to 10000 g/eq, preferably of from 150 g/eq to 6000 g/eq more preferred of from 200 g/eq to 2000 g/eq wherein the isocyanate equivalent weight was determined via titration according to DIN EN ISO 11909.

The isocyanate equivalent weight (IEW) of the polyoxazolidinone is defined as the total mass of the substance that contains 1 equivalent of isocyanate groups.

In a first embodiment the invention is related to a process for producing an isocyanate-group terminated polyoxazolidinone comprising the copolymerization of a polyisocyanate compound (A) with two or more isocyanate groups with a polyepoxide compound (B) with two or more epoxy groups in the presence of a catalyst (C) and optionally in a solvent (D);

wherein the molar ratio of the isocyanate groups of the polyisocyanate compound (A) to the epoxy groups of the polyepoxide compound (B) is larger than 2:1 and less than 25:1;

and wherein the catalyst (C) is at least one compound selected from the group consisting of

Li(I), Rb(I), Cs(I), Ag(I), Au(I),

Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),

Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), Al(III), Ga(III), In(III), Tl(III), Ge(III),

Ce(IV), Ti(IV), Zr(IV), Hf(IV), Nb(IV), Mo(IV), W(IV), Ir(IV), Pt(IV), Sn(IV), Pb(IV),

Nb(V), Ta(V), Bi(V),

Mo(VI), W(VI), and

compounds represented by the formula (I)

$$[M(R1)(R2)(R3)(R4)]+nYn- \qquad (I)$$

wherein M is phosphorous or antimony, preferred phosphorous

wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,

wherein Y is a halide, carbonate, nitrate, sulfate or phosphate anion, more preferred a halide or carbonate and

wherein n is an integer of 1, 2 or 3.

In a second embodiment the invention is related to the process according to the first embodiment, wherein the molar ratio of the isocyanate groups of the polyisocyanate compound (A) to the epoxy groups of the polyepoxide compound (B) is from 2.6:1 to 7:1, preferably from 2.7:1 to 6:1 more preferably from 2.8:1 to 5:1.

In a third embodiment the invention is related to the process according to the first or second embodiment, wherein the polyisocyanate compound (A) is an aliphatic polyisocyanate compound (A-1), and/or an aromatic polyisocyanate compound (A-2), preferable an aliphatic polyisocyanate compound (A-1).

In a fourth embodiment the invention is related to the process according to the second embodiment, wherein the polyepoxide compound (B) is an aliphatic polyepoxide compound (B-1) and/or aromatic polyepoxide compound (B-2), preferably aliphatic polyepoxide compound (B-1).

In a fifth embodiment the invention is related to the process according to any of the first to fourth embodiment, wherein the polyisocyanate compound (A) is an aliphatic polyisocyanate compound (A-1) and the polyepoxide compound (B) is an aliphatic polyepoxide compound (B-1).

In a sixth embodiment the invention is related to the process according to any of the first to fourth embodiment, wherein the polyisocyanate compound (A) is an aliphatic polyisocyanate compound (A-1) and the polyepoxide compound (B) is an aromatic polyepoxide compound (B-2).

In a seventh embodiment the invention is related to the process according to any of the first to fourth embodiment, wherein the polyisocyanate compound (A) is an aromatic polyisocyanate compound (A-2) and the polyepoxide compound (B) is an aliphatic polyepoxide compound (B-1).

In an eighth embodiment the invention is related to the process according to any of the first to fourth embodiment, wherein the polyisocyanate compound (A) is an aromatic polyisocyanate compound (A-2) and the polyepoxide compound (B) is an aromatic polyepoxide compound (B-2). In a ninth embodiment the invention is related to the process according to any of the first to eighth embodiment, wherein the catalyst (C) is at least one compound selected from the group consisting of LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, and LiI and most preferred LiBr.

In a tenth embodiment the invention is related to the process according to any of the first to ninth embodiment, wherein the catalyst (C) is used in a molar amount of 0.001 to 2.0 mol-%, preferably in an amount of 0.01 to ≤ 1.5 mol-%, more preferred ≥ 0.05 to ≤ 1.0 mol-%, based on the polyepoxide compound (B).

In a eleventh embodiment the invention is related to the process according to any of the first to tenth embodiment comprising the steps:

i) Mixing the polyisocyanate compound (A), the polyepoxide compound (B), the catalyst (C) and optionally the solvent (D) forming a mixture (i);
ii) Copolymerizing the mixture (i) forming an isocyanate-group terminated polyoxazolidinone mixture (ii);
iii) optionally removal of solvent (D) and/or unreacted polyisocyanate compound (A) from the isocyanate-group terminated polyoxazolidinone mixture (ii).

In a twelfth embodiment the invention is related to the process according to any of the first to tenth embodiment comprising the steps:

alpha) Mixing the the polyepoxide compound (B), at least part of the catalyst (C), and at least part of the solvent (D) forming a mixture (alpha);
beta) Addition of the polyisocyanate compound (A) and optionally the remaining part of the solvent (D) to the mixture (alpha) at copolymerization conditions forming an isocyanate-group terminated polyoxazolidinone mixture (beta);
gamma) optionally removal of solvent (D) and/or unreacted polyisocyanate compound (A) from the isocyanate-group terminated polyoxazolidinone mixture (beta).

In a thirteenth embodiment the invention is related to the process according to any of the first to twelfth embodiment, wherein the non-reacted polyisocyanate compound (A) and/or the solvent (D) is removed by thermal treatment method, preferable distillation and/or extraction, more preferably by thin-film evaporation.

In a fourteenth embodiment the invention is related to an isocyanate-group terminated polyoxazolidinone obtainable according to any of the first to thirteenth embodiments.

In a fifteenth embodiment the invention is related the isocyanate-group terminated polyoxazolidinone according to the fourteenth embodiment 14 with an isocyanate equivalent weight (IEW) of from 100 g/eq to 10000 g/eq, preferably of from 150 g/eq to 6000 g/eq more preferred of from 200 g/eq to 2000 g/eq wherein the epoxy equivalent weight was determined via titration according to DIN EN ISO 11909.

In a sixteenth embodiment the invention is related to the process according to any of the first to tenth and thirteenth embodiment comprising the steps:

a) Mixing the polyisocyanate compound (A) and at least part of the catalyst (C) and optionally at least part of the solvent (D) forming a mixture (a);
b) Addition of the polyepoxide compound (B) and optionally the remainder of the solvent (D) to the mixture (a) at copolymerization conditions forming an isocyanate-group terminated polyoxazolidinone mixture (b);
c) optionally removal of solvent (D) and/or unreacted polyisocyanate compound (A) from the isocyanate-group terminated polyoxazolidinone mixture (b).

### Examples

The present invention will be further described with reference to the following examples without wishing to be limited by them.

*Diisocyanate compound (A)*

A-I: 1-Isocyanato-4-[(4-isocyanatocyclohexyl)methyl]cyclohexane ($H_{12}$MDI), Covestro, AG, Germany.

*Epoxide compound (B)* For the calculation of the experimental molar ratios, a compound purity of 100 % was assumed for the diepoxides compounds. Possible impurities e.g. alcoholic compounds were neglected for the calculations.

| | |
|---|---|
| B-I: Araldite DY-D/CH | Butanediol diglycidyl ether (BDDE), EEW 118-125 g/eq; was obtained from HUNTSMAN Advanced Materials (Deutschland) GmbH, Germany. |
| B-II: Denacol EX-810 | 1,2-ethanediol diglycidyl ether, EEW 113 g/eq was obtained from NAGASE (Europa) GmbH, Germany. |

(continued)

| B-III: Denacol Ex-212 | 1,6-hexanediol diglycidyl ether, EEW 151 g/eq was obtained from NAGASE (Europa) GmbH, Germany |

*Catalyst (C)*

| C-I: LiCl | Lithium chloride, purity >99 %, was obtained from Sigma Aldrich. |
| C-II: DABCO | 1,4-Diazabicyclo[2.2.2]octane, purity >99%, was obtained from Sigma Aldrich |
| C-III: LiBr | Lithium bromide, purity >99,995 %, was obtained from Sigma Aldrich |

*Solvents (D)*

D-I: *Ortho*-dichlorobenzene (o-DCB), purity 99 %, anhydrous, was obtained from Sigma-Aldrich, Germany.

D-II: Sulfolane, purity ≥99 %, anhydrous, was obtained from Sigma-Aldrich, Germany.

$H_{12}$MDI, LiCl, and the epoxide compounds were used as received without further purification. Sulfolane was used after melting at 50°C and drying over molecular sieves. o-DCB was dried over molecular sieves prior to use.

*Characterization of polyoxazolidinone prepolymers*

IR

IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone prepolymer (2 mg) was applied to the diamond probe and the IR spectrum recorded averaging over 24 spectra obtained in the range of 4000 to 400 cm$^{-1}$ with a resolution of 4 cm$^{-1}$.
The peak height ratio of oxazolidinone to isocyanurate was calculated according to:

$$Ratio\,(oxazolidinone:isocyanurate) = \frac{peak\,height\,(oxazolidinone)}{peak\,height\,(isocyanurate)} \qquad (1)$$

using the peak height of the peak at 1749 cm$^{-1}$ for the oxazolidinone und the height of the peak at 1680 cm$^{-1}$ for the isocyanurate.

Isocyanate equivalent weight

The determination of the isocyanate content was determined via titration according to DIN EN ISO 11909.

Color Index

The Gardner color index was determined by using a Lico 690 from Hach. Therefore, sample of the product mixture was filled into a cuvette which was subsequently analyzed following the DIN EN ISO 1557.

Viscosity measurements

The viscosity values were determined via a cone/plate rheometer from Anton Paar MCR 302. A ramp of shear rates reaching from 10 - 600 1/min was used to determine the viscosity of the products. The viscosity is given in the unit mPa·s. (Following the procedure according to DIN EN ISO 3219/A.3)

GPC

GPC measurements were performed at 40 °C in tetrahydrofuran (THF, flow rate of 1.0 mL min$^{-1}$). The column set consisted of 4 consecutive columns (2 x PSS, SDV 50 A, 5 $\mu$L, and 2 x PSS, SDV 100 A, 5 $\mu$L)). Samples (concentration 2-3 g L$^{-1}$, injection volume 100 $\mu$L) were injected. An RID detector of the Agilent 1200 series was used to follow the concentration at the exit of the column. Raw data were processed using the PSS WinGPC Unity software package. Polystyrene of known molecular weight was used as reference to calculate the molecular weight distribution (PSS ReadyCal Kit in an area of 266 Da to 66.000 Da was used). The number average molecular weight measured by GPC is denominated as $M_n$(GPC) in the examples.

Reactor

The reaction was performed in a 250 mL 4 neck round bottom flask equipped with a glass reflux condenser, a gas inlet (N$_2$), a syringe pump (IP-SYRDOS2-HP-XLP from SyrDos), a glass inlet tube equipped with a temperature probe (GFX 460 from Ebro) and an overhead KPG agitator (RW20 from IKA). The round bottom flask was heated with a heating mantle from Winkler (WM/BRI/250 with a maximum heating capacity of 120 W) which was connected to the temperature probe with an RB 1691 B-S from Ebro.

*Example 1: Synthesis of isocyanate-terminated polyoxazolidinone-based prepolymers with H$_{12}$MDI as compound (A-I) and with Araldite DY-D/CH as compound (B-I) using LiCl (C-I) as compound (C) and a solvent mixture comprising o-DCB as compound (D-I) and sulfolane as compound (D-II) in a semi-batch procedure with molar ratio of isocyanate groups to epoxy groups of 4.3:1.*

A reactor as previously described was charged with LiCl (1.11 g, 0.26 mmol, 0.07 eq) (C-I). Then sulfolane (9.0 mL) (D-II) was added and the mixture was stirred (400 rpm) and flushed with nitrogen (ca. 1 mL/min) for 30 min. Subsequently, the mixture was heated to 175 °C before o-DCB (D-I) (17 mL) was added. Next, a mixture of Araldite DY-D/CH (17.44 g, 0.86 mmol, 0.23 eq) (BI), H$_{12}$MDI (98.38 g, 0.38 mmol, 1.0 eq) (A-1), and o-DCB (11 mL) (D-1) was added in a continuous manner at a rate of 4.2 mL/min via the syringe pump. After the addition of the monomers was completed, the reaction was stirred and heated for further 210 minutes before the reaction mixture was allowed to cool to room temperature.

Within the course of the reaction, samples of the reaction mixture were taken and analyzed by IR-spectroscopy. The completion of the reaction was confirmed by seeing that the isocyanate band (2260 cm$^{-1}$) in the IR spectrum from the reaction mixture did not change anymore. The epoxide bands unfortunately cannot be distinguished from noise signals.

In the IR spectrum the characteristic signal for the oxazolidinone carbonyl group was observed at 1749 cm$^{-1}$.

In the IR spectrum the characteristic signal for isocyanurate groups was observed. The peak height ratio of was calculated according to equation (1). A value of 3.73 was determined for the product mixture.

The isocyanate equivalent weight was determined to be 291 g/eq.

The analysis of the molecular weight with GPC showed an average molecular weight of 486 g/mol$^{-1}$ and a Polydispersity Index of 2.8.

The viscosity of the product mixture was determined to be 530 mPa·s.

According to the Gardner scale the color index of the product mixture was determined to be 5.1.

*Example 2: Synthesis of isocyanate-terminated polyoxazolidinone-based prepolymers with H$_{12}$MDI as compound (A-I) and with Araldite DY-D/CH as compound (B-I) using DABCO (C-II) as compound (C) and a solvent mixture comprising o-DCB as compound (D-I) and sulfolane as compound (D-II) in a semi-batch procedure with molar ratio of isocyanate groups to epoxy groups of 4.3:1.*

The reaction was carried out in the same manner as described for example 1. However, DABCO (C-II) was used instead of LiCl (C-I) as catalyst.

The peak height ratio of the oxazolidinone and isocyanurate was calculated as described in equation (1). A value of 0.78 was determined for the product mixture. Moreover, various side products can be observed in the IR-spectrum.

The isocyanate equivalent weight was determined to be 371 g/eq.

The analysis of the molecular weight with GPC showed an average molecular weight of 584 g·mol$^{-1}$ with a polydispersity index of 5.76.

The product mixture has a viscosity of 14,300 mPa·s.

According to the Gardner scale the color index of the product mixture was too color intense and thus above the detection limit of 18 (>18).

*Example 4: Synthesis of isocyanate-terminated polyoxazolidinone-based prepolymers with H$_{12}$MDI as compound (A-I) and with Denacol EX-810 as compound (B-II) using LiCl (C-I) as compound (C) and a solvent mixture comprising o-DCB as compound (D-I) and sulfolane as compound (D-II) in a semi-batch procedure with molar ratio of isocyanate groups to epoxy groups of 4.3:1.*

The reaction was carried out in the same manner as described for example 1. However, Denacol EX-810 (B-II) was used instead of Araldite DY-D/CH (B-1).

The peak height ratio of the oxazolidinone and isocyanurate was calculated as described in equation (1). A value of 6.6 was determined for the product mixture.

The isocyanate equivalent weight was determined to be 270 g/eq.

The analysis of the molecular weight with GPC showed an average molecular weight of 342 g·mol$^{-1}$ with a polydispersity index of 2.83.

The product mixture has a viscosity of 204 mPa·s.

According to the Gardner scale the color index of the product mixture determined to be 4.8.

*Example 5: Synthesis of isocyanate-terminated polyoxazolidinone-based prepolymers with H$_{12}$MDI as compound (A-I) and with Denacol EX-810 as compound (B-II) using LiCl (C-I) as compound (C) and a solvent mixture comprising o-DCB as compound (D-I) and sulfolane as compound (D-II) in a semi-batch procedure with molar ratio of isocyanate groups to epoxy groups of 1:2.5.*

The reaction was carried out in the same manner as described for example 4. However, the monomer ratio between H$_{12}$MDI (A-1) and Denacol EX-810 (B-II) was changed from 4.3:1 to 1:2.5.

The peak height ratio of the oxazolidinone and isocyanurate was calculated as described in equation (1). A value of 4.83 was determined for the product mixture.

The isocyanate equivalent weight was determined to be 358 g/eq.

The analysis of the molecular weight with GPC showed an average molecular weight of 586 g·mol$^{-1}$ with a polydispersity index of 3.14.

The product mixture has a viscosity of 19,700 mPa·s.

According to the Gardner scale the color index of the product mixture determined to be 11.0.

*Example 6: Synthesis of isocyanate-terminated polyoxazolidinone-based prepolymers with H$_{12}$MDI as compound (A-I) and with Denacol EX-212 as compound (B-III) using LiCl (C-I) as compound (C) and a solvent mixture comprising o-DCB as compound (D-I) and sulfolane as compound (D-II) in a semi-batch procedure with molar ratio of isocyanate groups to epoxy groups of 4.3:1.*

The reaction was carried out in the same manner as described for example 1. However, Denacol EX-212 (B-III) was used instead of Araldite DY-D/CH (B-1).

The peak height ratio of the oxazolidinone and isocyanurate was calculated as described in equation (1). A value of 5.21 was determined for the product mixture.

The isocyanate equivalent weight was determined to be 376 g/eq.

The analysis of the molecular weight with GPC showed an average molecular weight of 376 g·mol$^{-1}$ with a polydispersity index of 2.38.

The product mixture has a viscosity of 239 mPa·s.

According to the Gardner scale the color index of the product mixture determined to be 3.4.

Monomeric H$_{12}$MDI and the solvent mixture were removed in a thin-film evaporator at a temperature of 180°C and a pressure of 0.1 mbar. This gave a solid product of light brown color which had an isocyanate equivalent weight of 700 g/eq and a content of monomeric H$_{12}$MDI of 0.8%, which was determined with GPC measurements.

*Example 7: Synthesis of isocyanate-terminated polyoxazolidinone-based prepolymers with H$_{12}$MDI as compound (A-I) and with Araldite DY-D/CH as compound (B-I) using LiCl (C-I) as compound (C) and a solvent mixture comprising o-DCB as compound (D-I) and sulfolane as compound (D-II) in a semi-batch procedure with molar ratio of isocyanate groups to epoxy groups of 4.3:1.*

The reaction was carried out in the same manner as described for example 1. However, LiCl (C-I) was used in a lower amount (0.01 eq instead of 0.07 eq)

The peak height ratio of the oxazolidinone and isocyanurate was calculated as described in equation (1). A value of 6.05 was determined for the product mixture.

The isocyanate equivalent weight was determined to be 277 g/eq.

The analysis of the molecular weight with GPC showed an average molecular weight of 449 g·mol$^{-1}$ with a polydispersity index of 2.36.

The product mixture has a viscosity of 529 mPa·s.

According to the Gardner scale the color index of the product mixture determined to be 5.8.

*Example 8: Synthesis of isocyanate-terminated polyoxazolidinone-based prepolymers with H$_{12}$MDI as compound (A-I) and with Araldite DY-D/CH as compound (B-I) using LiBr (C-III) as compound (C) and a solvent mixture comprising o-DCB as compound (D-I) and sulfolane as compound (D-II) in a semi-batch procedure with molar ratio of isocyanate groups to epoxy groups of 4.3:1.*

The reaction was carried out in the same manner as described for example 7. However, LiBr (C-III) was used instead of LiCl (C-I).

The peak height ratio of the oxazolidinone and isocyanurate was calculated as described in equation (1). A value of 14.4 was determined for the product mixture.

The isocyanate equivalent weight was determined to be 277 g/eq.

The analysis of the molecular weight with GPC showed an average molecular weight of 450 g·mol$^{-1}$ with a polydispersity index of 2.24.

The product mixture has a viscosity of 480 mPa·s.

According to the Gardner scale the color index of the product mixture determined to be 5.8.

Comparison

Table 1: Comparison of the results of Examples 1 to 8.

| Example | Compound | | | | Molar Ratio isocyanate groups: epoxy groups | Solids content [%] | NCO equivalent weight [g/eq] | Mn [g/mol] | D | Oxa/Tri Ratio | Color [Gardner index] | Viscosity [mPa·s] |
|---|---|---|---|---|---|---|---|---|---|---|---|---|
| | (A) | (B) | (C) | (D) | | | | | | | | |
| 1 | H$_{12}$MDI | Araldite DY-D | LiCl | o-DCB, sulfolane | 4.3:1 | 71 | 291 | 486 | 2.8 | 3.73 | 5.1 | 530 |
| 2 (comp.) | H$_{12}$MDI | Araldite DY-D | DABCO | o-DCB, sulfolane | 4.3:1 | 71 | 371 | 584 | 5.76 | 0.76 | Out of range >18 | 14300 |
| 4 | H$_{12}$MDI | Denacol EX-810 | LiCl | o-DCB, sulfolane | 4.3:1 | 71 | 270 | 342 | 2.83 | 6.60 | 4.8 | 204 |
| 5 | H$_{12}$MDI | Denacol EX-810 | LiCl | o-DCB, sulfolane | 2.5:1 | 77 | 358 | 586 | 3.14 | 4.83 | 11.0 | 19700 |
| 6 | H$_{12}$MDI | Denacol EX-212 | LiCl | o-DCB, sulfolane | 4.3:1 | 71 | 284 | 376 | 2.38 | 5.21 | 3.4 | 239 |
| 7 | H$_{12}$MDI | Araldite DY-D | LiCl (0.01 eq.) | o-DCB, sulfolane | 4.3:1 | 71 | 277 | 449 | 2.36 | 6.05 | 5.8 | 529 |
| 8 | H$_{12}$MDI | Araldite DY-D | LiBr (0.01 eq.) | o-DCB, sulfolane | 4.3:1 | 71 | 277 | 450 | 2.24 | 14.40 | 5,8 | 480 |
| comp.: comparative example | | | | | | | | | | | | |

**Claims**

1. A process for producing an isocyanate-group terminated polyoxazolidinone comprising the copolymerization of a polyisocyanate compound (A) with two or more isocyanate groups with a polyepoxide compound (B) with two or more epoxy groups in the presence of a catalyst (C) and optionally in a solvent (D);
   wherein the molar ratio of the isocyanate groups of the polyisocyanate compound (A) to the epoxy groups of the polyepoxide compound (B) is larger than 2:1 and less than 25:1; and wherein the catalyst (C) is at least one compound selected from the group consisting of Li(I), Rb(I), Cs(I), Ag(I), Au(I),
   Mg(II), Ca(II), Sr(II), Ba(II), Dy(II), Yb(II), Cu(II), Zn(II), V(II), Mo(II), Mn(II), Fe(II), Co(II)
   Ni(II), Pd(II), Pt(II), Ge(II), Sn(II),
   Sc(III), Y(III), La(III), Ce(III), Pr(III), Nd(III), Sm(III), Eu(III), Gd(III), Tb(III), Dy(III), Ho(III),
   Er(III), Tm(III), Yb(III), Lu(III), Hf(III), Nb(III), Ta(III), Cr(III), Ru(III), Os(III), Rh(III), Ir(III),
   Al(III), Ga(III), In(III), Tl(III), Ge(III),
   Ce(IV), Ti(IV), Zr(IV), Hf(IV), Nb(IV), Mo(IV), W(IV), Ir(IV), Pt(IV), Sn(IV), Pb(IV), Nb(V), Ta(V), Bi(V),
   Mo(VI), W(VI), and
   compounds represented by the formula (I)

   $$[M(R1)(R2)(R3)(R4)]+nYn- \qquad (I)$$

   wherein M is phosphorous or antimony, preferred phosphorous
   wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,
   wherein Y is a halide, carbonate, nitrate, sulfate or phosphate anion, more preferred a halide or carbonate and wherein n is an integer of 1, 2 or 3.

2. A process according to claim 1, wherein the molar ratio of the isocyanate groups of the polyisocyanate compound (A) to the epoxy groups of the polyepoxide compound (B) is from 2.6:1 to 7:1, preferably from 2.7:1 to 6:1 more preferably from 2.8:1 to 5:1.

3. A process according to claim 1 or 2, wherein the polyisocyanate compound (A) is an aliphatic polyisocyanate compound (A-1) and/or an aromatic polyisocyanate compound (A-2), preferably an aliphatic polyisocyanate compound (A-1).

4. A process according to one of claims 1 to 3, wherein the polyepoxide compound (B) is an aliphatic polyepoxide compound (B-1) and/or aromatic polyepoxide compound (B-2), preferably aliphatic polyepoxide compound (B-1).

5. A process according to one of claims 1 to 4, wherein the polyisocyanate compound (A) is an aliphatic polyisocyanate compound (A-1) and the polyepoxide compound (B) is an aliphatic polyepoxide compound (B-1).

6. A process according to one of claims 1 to 4, wherein the polyisocyanate compound (A) is an aliphatic polyisocyanate compound (A-1) and the polyepoxide compound (B) is an aromatic polyepoxide compound (B-2).

7. A process according to one of claims 1 to 4, wherein the polyisocyanate compound (A) is an aromatic polyisocyanate compound (A-2) and the polyepoxide compound (B) is an aliphatic polyepoxide compound (B-1).

8. A process according to one of claims 1 to 4, wherein the polyisocyanate compound (A) is an aromatic polyisocyanate compound (A-2) and the polyepoxide compound (B) is an aromatic polyepoxide compound (B-2).

9. The process according to any one of claims 1 to 8, wherein the catalyst (C) is at least one compound selected from the group consisting of LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, and LiI and most preferred LiBr.

10. The process according to any one of claims 1 to 9, wherein the catalyst (C) is used in a molar amount of 0.001 to 2.0 mol-%, preferably in an amount of 0.01 to ≤ 1.5 mol-%, more preferred ≥ 0.05 to ≤ 1.0 mol-%, based on the polyepoxide compound (B).

11. The process according to any one of claims 1 to 10 comprising the steps:

   i) Mixing the polyisocyanate compound (A), the polyepoxide compound (B), the catalyst (C) and optionally the solvent (D) forming a mixture (i);
   ii) Copolymerizing the mixture (i) forming an isocyanate-group terminated polyoxazolidinone mixture (ii);
   iii) optionally removal of solvent (D) and/or unreacted polyisocyanate compound (A) from the isocyanate-group terminated polyoxazolidinone mixture (ii).

12. The process according to any one of claims 1 to 10 comprising the steps:

   alpha) Mixing the the polyepoxide compound (B), at least part of the catalyst (C), and at least part of the solvent (D) forming a mixture (alpha);
   beta) Addition of the polyisocyanate compound (A) and optionally the remaining part of the solvent (D) to the mixture (alpha) at copolymerization conditions forming an isocyanate-group terminated polyoxazolidinone mixture (beta);
   gamma) optionally removal of solvent (D) and/or unreacted polyisocyanate compound (A) from the isocyanate-group terminated polyoxazolidinone mixture (beta).

13. A process according to any one of claims 1 to 12, wherein the non-reacted polyisocyanate compound (A) and/or the solvent (D) is removed by thermal treatment method, preferable distillation and/or extraction, more preferably by thin-film evaporation.

14. An isocyanate-group terminated polyoxazolidinone obtainable according to one of claims 1 or 13.

15. Polyoxazolidinone according to claim 14 with an isocyanate equivalent weight (IEW) of from 100 g/eq to 10000 g/eq, preferably of from 150 g/eq to 6000 g/eq more preferred of from 200 g/eq to 2000 g/eq wherein the epoxy equivalent weight was determined via titration according to DIN EN ISO 11909.

Europäisches
Patentamt

European
Patent Office

Office européen
des brevets

# EUROPEAN SEARCH REPORT

Application Number

EP 19 17 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARJORIE FLORES ET AL: "Ytterbium triflate as a new catalyst on the curing of epoxyisocyanate based thermosets", THERMOCHIMICA ACTA, ELSEVIER SCIENCE PUBLISHERS, AMSTERDAM, NL, vol. 543, 19 May 2012 (2012-05-19), pages 188-196, XP028401057, ISSN: 0040-6031, DOI: 10.1016/J.TCA.2012.05.012 [retrieved on 2012-05-28] * page 189, paragraph 3 - paragraph 4 * * table 1 * | 1-15 | INV. C08G18/00 C08G18/22 C08G18/20 C08G18/76 C08G18/75 C08G18/78 C08G59/22 |
| A | US 4 658 007 A (MARKS MAURICE J [US] ET AL) 14 April 1987 (1987-04-14) * example 9 * | 1-15 | |

TECHNICAL FIELDS
SEARCHED (IPC)

C08G

The present search report has been drawn up for all claims

| Place of search | Date of completion of the search | Examiner |
|---|---|---|
| Munich | 4 December 2019 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 9688

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2019

| Patent document cited in search report | | Publication date | Patent family member(s) | | Publication date |
|---|---|---|---|---|---|
| US 4658007 | A | 14-04-1987 | EP | 0222872 A1 | 27-05-1987 |
| | | | JP | S62500730 A | 26-03-1987 |
| | | | US | 4658007 A | 14-04-1987 |
| | | | WO | 8606734 A1 | 20-11-1986 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4129695 A
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 870400 A
- DE 953012 A
- DE 1090196 A
- EP 0546399 A
- CN 105218780
- CN 103881050
- CN 101717571
- US 3183112 A
- EP 0416338 A
- EP 0751163 A
- EP 1378529 A
- EP 1378530 A
- EP 2174967 A
- JP 63260915 B
- JP 56059828 B
- DE 1670667 A
- EP 0078991 A
- EP 0696606 A
- EP 0807623 A

**Non-patent literature cited in the description**

- **M. E. DYEN ; D. SWERN.** *Chem. Rev.,* 1967, vol. 67, 197
- *J. Polym. Sci.,* 1970, vol. 8, 2759-2773
- **PELZER et al.** *European Polymer Journal,* 2018, vol. 107
- *J. Prakt. Chem.,* 1994, vol. 336, 185-200